# EUROPEAN PATENT SPECIFICATION

(11) **EP 3 280 015 B1**
(45) Date of publication and mention of the grant of the patent: **29.01.2020**
(21) Application number: 16771873.3
(22) Date of filing: 02.02.2016
(51) Int. Cl.: H02B 11/133, H02B 1/36

(54) **CONTROL CENTER**
STEUERZENTRALE
CENTRE DE COMMANDE

(30) Priority: 30.03.2015 JP 2015067940
(43) Date of publication of application: 07.02.2018
(73) Proprietor: Mitsubishi Electric Corporation, Chiyoda-ku Tokyo 100-8310 (JP)
(72) Inventor: NISHIKAWA ,Tetsuji, Tokyo 100-8310 (JP); OHARA, Masato, Tokyo 100-8310 (JP); KONDO, Daijiro, Tokyo 100-8310 (JP)
(74) Representative: Sajda, Wolf E.
(86) International application number: PCT/JP2016/052998
(87) International publication number: WO 2016/157989

(56) References cited:
- EP-A2- 0 308 868
- WO-A1-2008/122533
- GB-A- 2 258 568
- GB-A- 2 279 501
- JP-A- S6 485 506
- JP-A- 2010 239 685
- JP-A- 2010 239 685
- JP-U- S59 180 490
- JP-Y1- S 359 022

## Description

### Technical Field

The present invention relates to an insertion/removal mechanism of a functional unit in, for example, a motor control center acting as a control center.

### Background Art

For example, when inserting/removing a functional unit in a motor control center, an insertion/removal handle is used as a supplementary tool when excessive operating force is required due to, for example, a bite into a junction.

A control center using the insertion/removal handle is of a structure wherein a door, which is a front cover, can be opened only when the functional unit is in a power OFF state. In the case of using the insertion/removal handle in the control center of this kind of structure, as the insertion/removal handle is inserted after the door is opened, the inside of the functional unit always comes into the power OFF state. Therefore, it neither happens that the insertion/removal handle comes into contact with a charging portion, nor that the functional unit is drawn out under live line condition.

### List of Citations

### Patent Literature

PTL 1: JP 2010-239 685 A

EP 0 308 868 A2; GB 2 279 501 A; GB 2 258 568 A; and WO 2008/122533 A1 are each related to the background art of control centers and insertion/removal mechanisms of functional units. EP 0 308 868 A2 discloses a control center comprising a functional unit equipped with a molded case circuit breaker and provided with an insertion/removal handle insertion slot and a shutter linked to the operating mechanism of the circuit breaker which prevents the insertion of the insertion/removal handle into the insertion slot when the operating mechanism is in the ON state.

### Summary of the Invention

### Technical Problem

An opening portion into which to insert the insertion/removal handle is required in a control center of a fixed panel type wherein the front cover of the functional unit is not the door as in the heretofore known control center described in PTL 1 described above.

As the insertion/removal handle can be inserted into the opening portion no matter whether the power is ON or OFF, the functional unit can be drawn out under live line condition. Moreover, as there is also a fear that the insertion/removal handle comes into contact with a live line portion depending on the position of an insertion/removal handle insertion slot, there is a problem in safety.

The invention, having been contrived in order to solve the above described kinds of problems, has for its object to provide a control center which prevents an insertion/removal handle from being inserted into an insertion/removal handle insertion slot when an operating handle mechanism in a functional unit is in an ON state, and enables the insertion/removal handle to be inserted into the insertion/removal handle insertion slot when the operating handle mechanism in the functional unit is in an OFF state.

### Solution to the Problem

The control center according to the invention is a control center including a functional unit which is housed on a baseplate of a functional unit housing space of a casing and which is equipped with a molded case circuit breaker, wherein the functional unit is provided with an operating handle mechanism which is configured to turn ON/OFF the molded case circuit breaker; an insertion/removal handle insertion slot into which to insert an insertion/removal handle having a first protrusion and second protrusion; a protector which is linked to the operating handle mechanism and which has an insertion prevention portion for preventing the insertion of the insertion/removal handle and an engaging portion on the lower end side, wherein when the operating handle mechanism is in an ON state, the insertion prevention portion covers the insertion/removal handle insertion slot, thus preventing the insertion/removal handle from being inserted into the insertion/removal handle insertion slot; an insertion/removal metal piece which is provided in the insertion/removal handle insertion slot and which has an engagement elongate hole with which the first protrusion of the insertion/removal handle is to be engaged; the control center comprises a first engagement hole which is formed in the baseplate and with which the engaging portion of the protector is to be engaged when the operating handle mechanism is in the ON state; and a second engagement hole which is formed in the baseplate and with which the second protrusion of the insertion/removal handle is to be engaged.

### Advantageous Effects of Invention

According to the control center of the invention, it is possible to obtain a functional unit superior in safety which prevents the insertion/removal handle from being inserted into the insertion/removal handle insertion slot when the operating handle mechanism in the functional unit is in the ON state, and enables the insertion/removal handle to be inserted into the insertion/removal handle insertion slot when the operating handle mechanism in the functional unit is in the OFF state.

### Brief Description of the Drawings

- FIG. 1: is a perspective view showing a control center according to a related Example.
- FIG. 2: is a perspective view showing an OFF state of an operating handle mechanism of a breaker in a functional unit of the control center according to the Example.
- FIG. 3: is a perspective view showing an ON state of the operating handle mechanism of the breaker in the functional unit of the control center according to the Example.
- FIG. 4: is a plan view showing an insertion/removal handle in the functional unit of the control center according to the Example.
- FIG. 5: is a front view showing the insertion/removal handle in the functional unit of the control center according to the Example.
- FIG. 6: is a front view showing a protector in the functional unit of the control center according to the Example.
- FIG. 7: is a plan view showing the protector in the functional unit of the control center according to the Example.
- FIG. 8: is a side view showing the protector in the functional unit of the control center according to the Example.
- FIG. 9: is a development view showing a molded case circuit breaker, and an operating handle mechanism, in the functional unit of the control center according to the Example.
- FIG. 10: is a main portion front view showing the OFF state of the operating handle mechanism of the molded case circuit breaker in the functional unit of the control center according to the Example.
- FIG. 11: is a sectional view along the line A-A of FIG. 10 of the functional unit of the control center according to the Example.
- FIG. 12: is a sectional view along the line B-B of FIG. 11 of the functional unit of the control center according to the Example.
- FIG. 13: is a main portion front view showing the ON state of the operating handle mechanism of the molded case circuit breaker in the functional unit of the control center according to the Example.
- FIG. 14: is a sectional view along the line C-C of FIG. 13 of the functional unit of the control center according to the Example.
- FIG. 15: is a sectional view along the line D-D of FIG. 14 of the functional unit of the control center according to the Example.
- FIG. 16: is a main portion perspective view showing a portion of a protector, and of an insertion/removal handle insertion slot, in a functional unit of a control center according to Embodiment 1 of the invention.
- FIG. 17: is a main portion perspective view showing a portion of the protector and insertion/removal handle insertion slot in the functional unit of the control center according to Embodiment 1 of the invention.
- FIG. 18: is a main portion plan view showing a portion of the protector and insertion/removal handle insertion slot in the functional unit of the control center according to Embodiment 1 of the invention.
- FIG. 19: is a main portion perspective view showing a portion of the protector and insertion/removal handle insertion slot in the functional unit of the control center according to Embodiment 1 of the invention.
- FIG. 20: is a main portion plan view showing a portion of the protector and insertion/removal handle insertion slot in the functional unit of the control center according to Embodiment 1 of the invention.
- FIG. 21: is a main portion perspective view showing a portion of the protector and insertion/removal handle insertion slot in the functional unit of the control center according to Embodiment 1 of the invention.
- FIG. 22: is a main portion plan view showing a portion of the protector and insertion/removal handle insertion slot in the functional unit of the control center according to Embodiment 1 of the invention.

### Description of Embodiments

### Example Disclosure.

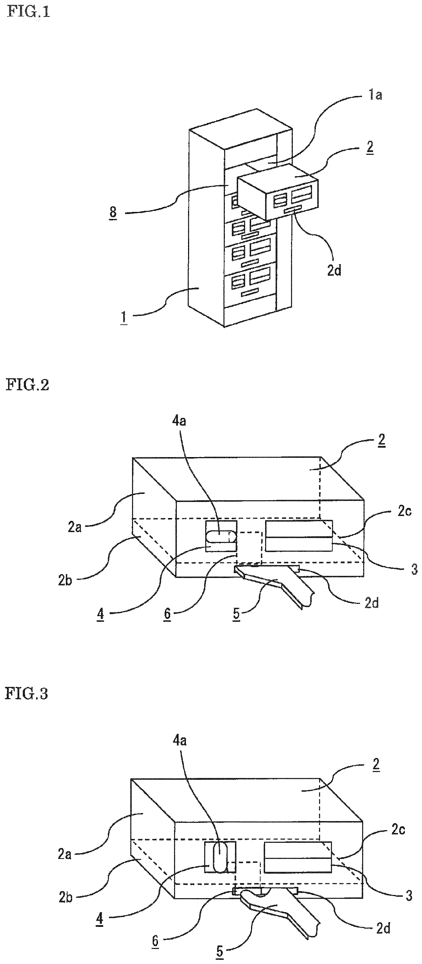

Hereafter, a description will be given, based on FIGS. 1 to 15, of an Example, but in the individual drawings, identical or equivalent members and parts will be described with identical signs. FIG. 1 is a perspective view showing a control center according to an Example. FIG. 2 is a perspective view showing an OFF state of a breaker in a functional unit of the control center according to an Example.

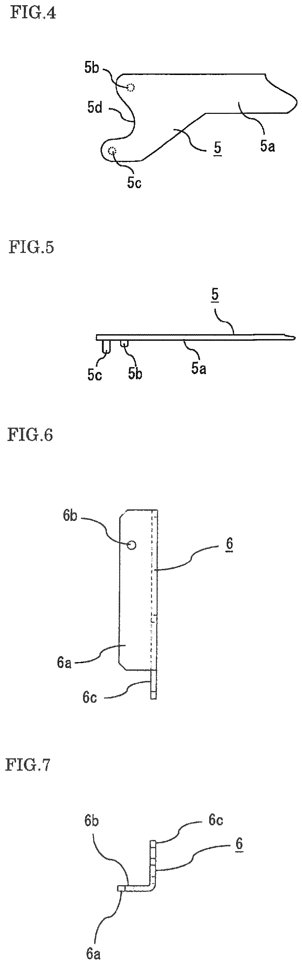

FIG. 3 is a perspective view showing an ON state of the breaker in the functional unit of the control center according to an Example. FIG. 4 is a plan view showing an insertion/removal handle in the functional unit of the control center according to an Example. FIG. 5 is a front view of the insertion/removal handle in the functional unit of the control center according to an Example.

FIG. 6 is a front view showing a protector in the functional unit of the control center according to an Example. FIG. 7 is a plan view showing the protector in the functional unit of the control center according to an Example.

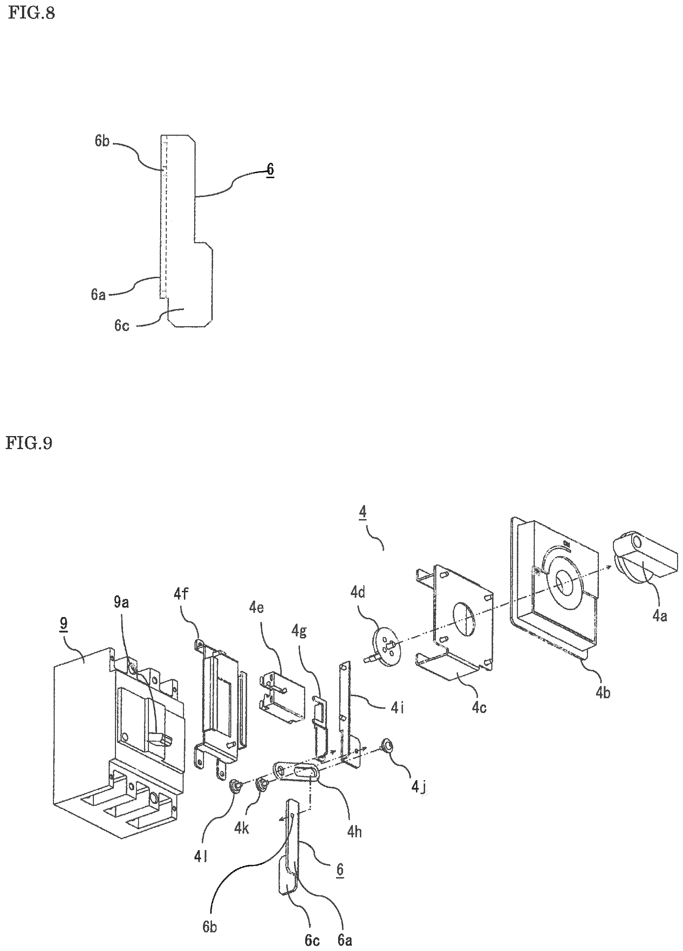

FIG. 8 is a side view showing the protector in the functional unit of the control center according to an Example. FIG. 9 is a development view showing a molded case circuit breaker, and an operating handle mechanism, in the functional unit of the control center according to an Example.

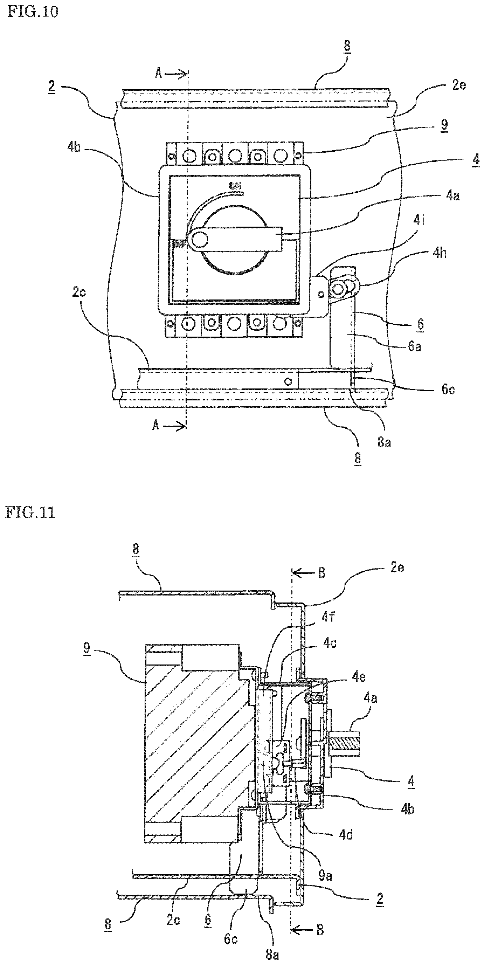

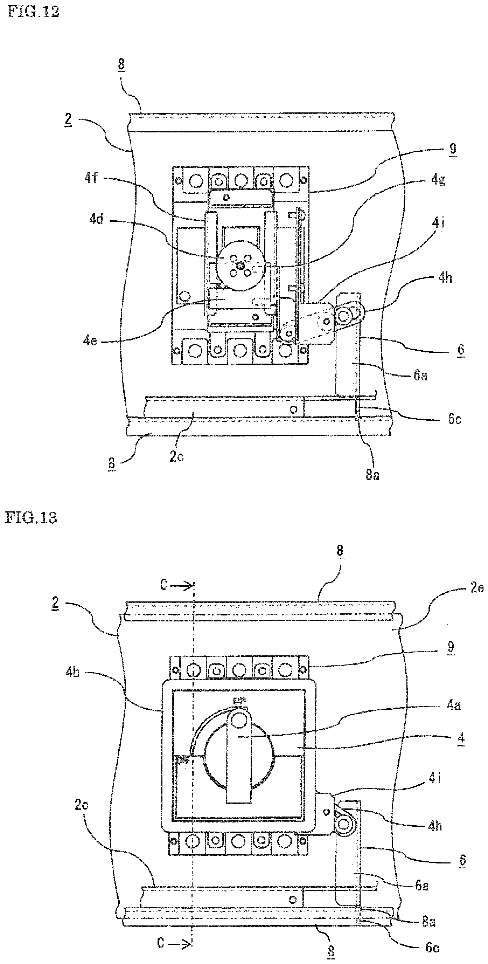

FIG. 10 is a main portion front view showing an OFF state of the operating handle mechanism of the molded case circuit breaker in the functional unit of the control center according to an Example. FIG. 11 is a sectional view along the line A-A of FIG. 10 of the functional unit of the control center according to an Example. FIG. 12 is a sectional view along the line B-B of FIG. 11 of the functional unit of the control center according to an Example.

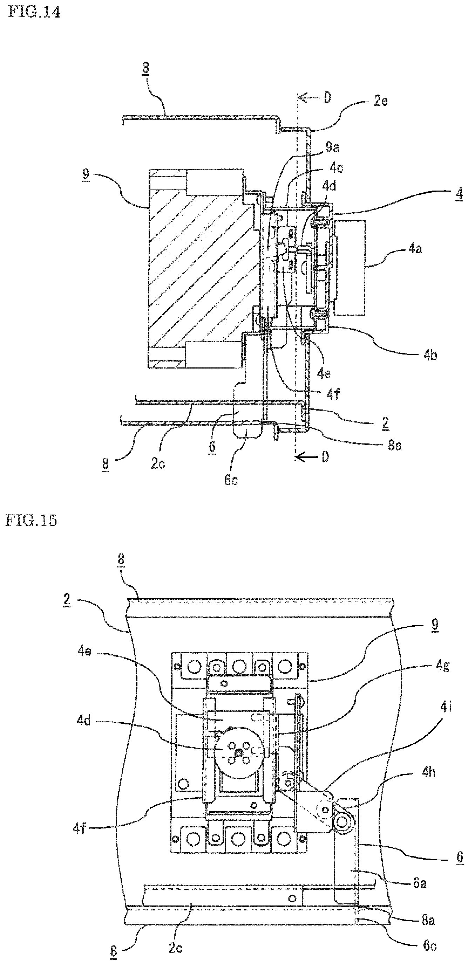

FIG. 13 is a main portion front view showing an ON state of the operating handle mechanism of the molded case circuit breaker in the functional unit of the control center according to an Example. FIG. 14 is a sectional view along the line C-C of FIG. 13 of the functional unit of the control center according to an Example. FIG. 15 is a sectional view along the line D-D of FIG. 14 of the functional unit of the control center according to an Example.

In these individual drawings, for example, a functional unit 2 is inserted into a functional unit housing space 1a of a casing 1 acting as a motor control center, and is held on a baseplate 8 disposed between adjacent functional units. The functional unit 2 is partitioned by a functional unit inner partition plate 2c into, for example, a charging portion 2a disposed on the upper side and a non-charging portion 2b disposed on the lower side.

An insertion/removal handle insertion slot 2d into which to insert an insertion/removal handle 5 is provided on the non-charging portion 2b side of the functional unit 2. The insertion/removal handle 5 is configured of, for example, an insertion/removal handle basic portion 5a, a first protrusion 5b, and a second protrusion 5c, and a recessed portion 5d is provided between the first protrusion 5b and the second protrusion 5c.

A protector 6, which is to be linked to an MCCB operating handle mechanism 4 of a molded case circuit breaker (hereafter called the MCCB) 9 disposed in the functional unit 2, forms, for example, an L shape, and is configured of an insertion prevention portion 6a, which is to cover the insertion/removal handle insertion slot 2d of the functional unit 2 when the MCCB operating handle mechanism 4 is in an ON state, a linking hole 6b, through which the protector 6 is to be linked to the MCCB operating handle mechanism 4, and an engaging portion 6c on the lower side.

In an Example, the structure is such that by an ON operation of the MCCB operating handle mechanism 4 of the MCCB 9, the insertion prevention portion 6a of the protector 6 linked to the MCCB operating handle mechanism 4 covers the insertion/removal handle insertion slot 2d of the functional unit 2, thereby preventing an insertion of the insertion/removal handle 5.

The MCCB operating handle mechanism 4 to be mounted on the MCCB 9 is configured of an operating knob 4a, an operating panel 4b, a mounting bracket 4c, a cam 4d, a link 4e, a mounting bracket 4f, a link 4g, a link 4h, a mounting bracket 4i, and pins 4j, 4k, and 41, as shown in FIG. 9.

A description will be given of a configuration of the MCCB 9, MCCB operating handle mechanism 4, and protector 6. The link 4e is engaged with a knob 9a of the MCCB 9 by being guided by the mounting bracket 4f of the MCCB operating handle mechanism 4.

The link 4e is engaged with the cam 4d by being guided by the mounting bracket 4f, and moves up and down in conjunction with the rotation of the cam 4d resulting from a pivoting of the operating knob 4a. The up and down movement of the link 4e enables ON/OFF operation of the knob 9a of the MCCB 9.

The protector 6 also moves up and down in conjunction with the pivoting of the operating knob 4a of the MCCB operating handle mechanism 4. The link 4h is linked to the link 4g engaged with the link 4e, and the linking hole 6b of the protector 6 is linked to the link 4h.

In FIGS. 10 to 12, the operating knob 4a of the MCCB operating handle mechanism 4 is in an OFF state, and the MCCB 9 is in an OFF state. When in the OFF state, the engaging portion 6c of the protector 6 moves upward, thus releasing the engagement with a first engagement hole 8a of the baseplate 8, while the lower edge of the insertion prevention portion 6a of the protector 6 also moves upwardly of the insertion/removal handle insertion slot 2d of the functional unit 2, thus opening the insertion/removal handle insertion slot 2d. Because of this, the insertion/removal handle 5 becomes ready to be inserted into the insertion/removal handle insertion slot 2d of the functional unit 2.

Also, in FIGS. 13 to 15, the operating knob 4a of the MCCB operating handle mechanism 4 is in an ON state, and the MCCB 9 is in an ON state. When in the ON state, the operating knob 4a of the MCCB operating handle mechanism 4 is pivoted to an ON position. The cam 4d rotates in conjunction with the pivoting of the operating knob 4a, and along with the rotation of the cam 4d, the link 4e moves upward by being guided by the mounting bracket 4f, thus ON operating the knob 9a of the MCCB 9.

Along with the upward movement of the link 4e, the link 4g also moves upward, and one side of the link 4h linked to the link 4g pivots upwardly while the other side of the link 4h pivots downwardly. Along with the pivoting of the link 4h, the protector 6 linked to the other side of the link 4h moves downward.

Along with the downward movement of the protector 6, the engaging portion 6c of the protector 6 moves downward and engages with the first engagement hole 8a of the baseplate 8, thus bringing the functional unit 2 into an undrawable state and also placing the functional unit 2 in position.

Further, the insertion prevention portion 6a of the protector 6 also moves downward and covers the insertion/removal handle insertion slot 2d of the functional unit 2, resulting in a state in which the insertion/removal handle 5 cannot be inserted into the insertion/removal handle insertion slot 2d of the functional unit 2.

The functional unit 2 is partitioned by the functional unit inner partition plate 2c into the charging portion 2a and non-charging portion 2b. As the insertion/removal handle insertion slot 2d of the functional unit 2 is in the non-charging portion 2b, the insertion/removal handle 5 never comes into contact with a charging part even when being inserted into the insertion/removal handle insertion slot 2d.

Also, in the ON state of the MCCB operating handle mechanism 4, as the insertion prevention portion 6a of the protector 6 moves downward and covers the insertion/removal handle insertion slot 2d of the functional unit 2, the insertion/removal handle 5 cannot be inserted into the insertion/removal handle insertion slot 2d.

Consequently, because of the existence of the protector 6, the insertion/removal handle 5 cannot be used in the ON state of the MCCB 9, and the functional unit 2 can be prevented from being drawn out under live line condition, thus making it possible to obtain a control center superior in safety.

In this way, as it is impossible to draw out the functional unit 2 in the ON state of the MCCB operating handle mechanism 4 of the functional unit 2, it is possible to prevent a disconnection under live line condition.

Also, as the insertion/removal handle 5 is prevented from being inserted in the ON state of the MCCB operating handle mechanism 4 of the functional unit 2, it is possible to suppress an erroneous drawing out with excessive operating force.

Also, as the insertion/removal handle insertion slot 2d of the functional unit 2 is isolated from a live line portion of the functional unit 2, there is no possibility of electrical shock even in the event that the insertion/removal handle 5 can be inserted.

### Embodiment 1

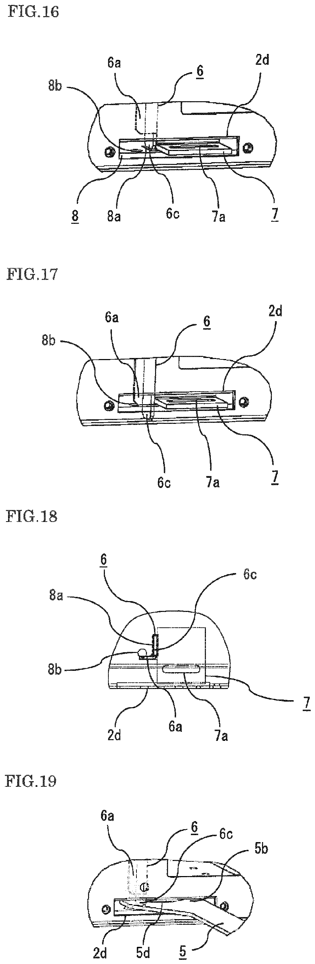

A description will be given, based on FIGS. 16 to 22, of Embodiment 1 of the invention, but in the individual drawings, identical or equivalent members and parts will be described with identical signs. FIG. 16 is a main portion perspective view showing a portion of a protector, and of an insertion/removal handle insertion slot, in a functional unit of a control center according to Embodiment 1 of the invention.

FIG. 17 is a main portion perspective view showing a portion of the protector and insertion/removal handle insertion slot in the functional unit of the control center according to Embodiment 1 of the invention. FIG. 18 is a main portion plan view showing a portion of the protector and insertion/removal handle insertion slot in the functional unit of the control center according to Embodiment 1 of the invention.

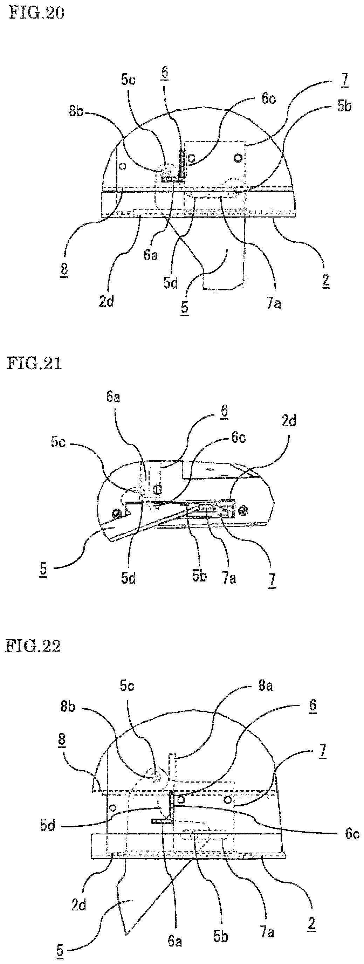

FIG. 19 is a main portion perspective view showing a portion of the protector and insertion/removal handle insertion slot in the functional unit of the control center according to Embodiment 1 of the invention. FIG. 20 is a main portion plan view showing a portion of the protector and insertion/removal handle insertion slot in the functional unit of the control center according to Embodiment 1 of the invention.

FIG. 21 is a main portion perspective view showing a portion of the protector and insertion/removal handle insertion slot in the functional unit of the control center according to Embodiment 1 of the invention. FIG. 22 is a main portion plan view showing a portion of the protector and insertion/removal handle insertion slot in the functional unit of the control center according to Embodiment 1 of the invention.

In Embodiment 1, the structure is such that when an MCCB operating handle mechanism 4 of an MCCB 9 is in an ON state, an engaging portion 6c of a protector 6 is brought into engagement with a first engagement hole 8a of a baseplate 8, thereby making it impossible to draw out a functional unit 2.

The functional unit 2 is configured of the MCCB operating handle mechanism 4, which turns ON/OFF the MCCB 9, an insertion/removal hand insertion slot 2d, into which to insert an insertion/removal handle 5 having a first protrusion 5b and second protrusion 5c, the protector 6, which is to be linked to the MCCB operating handle mechanism 4 and which has an insertion prevention portion 6a for preventing the insertion of the insertion/removal handle 5 and the engaging portion 6c on the lower end side, wherein the insertion prevention portion 6a covers the insertion/removal handle insertion slot 2d when in the ON state of the MCCB operating handle mechanism 4, thus preventing the insertion/removal handle 5 from being inserted into the insertion/removal handle insertion slot 2d, an insertion/removal metal piece 7, which is provided in the insertion/removal handle insertion slot 2d and which has an engagement elongate hole 7a with which the first protrusion 5b of the insertion/removal handle 5 is to be engaged, the first engagement hole 8a, which is formed in the baseplate 8 and with which the engaging portion 6a of the protector 6 is to be engaged, and a second engagement hole 8b, which is formed in the baseplate 8 and with which the second protrusion 5c of the insertion/removal handle 5 is to be engaged.

As shown in FIG. 16, when the MCCB operating handle mechanism 4 is in an OFF state, the engaging portion 6c of the protector 6 to be engaged with the baseplate 8 is in a non-charging portion 2b of the functional unit 2, but does not prevent the insertion of the insertion/removal handle 5.

When putting the MCCB operating handle mechanism 4 in the ON state, the protector 6 moves in a downward direction, the engaging portion 6c of the protector 6 to be engaged with the baseplate 8 enters and is brought into engagement with the first engagement hole 8a which is provided in the baseplate 8 and which is to be engaged with the protector 6, as shown in FIG. 17. At this time, the dimensional relationship between the engaging portion 6c of the protector 6 and the first engagement hole 8a of the baseplate 8 is set to, for example, a state in which there is no margin in a front-back direction.

The engaging portion 6c of the protector 6 and the first engagement hole 8a of the baseplate 8 are engaged together, thereby fixing the functional unit 2 in the front-back direction and also placing the functional unit 2 in position. Consequently, it is possible to make the functional unit 2 undrawable even when not using the insertion/removal handle 5.

It goes without saying that as the insertion prevention portion 6a of the protector 6 covers the insertion/removal handle insertion slot 2d of the functional unit 2 at the same time as the baseplate 8 of the protector 6 and the first engagement hole 8a of the baseplate 8 are engaged together, the insertion/removal handle 5 becomes unable to be inserted into the insertion/removal handle insertion slot 2d.

Next, in order to draw out the functional unit 2, an operating knob 4a of the MCCB operating handle mechanism 4 is pivoted to an OFF position. When in this OFF state, the MCCB 9 is in an OFF state. A cam 4d rotates in conjunction with the pivoting of the operating knob 4a, and along with the rotation of the cam 4d, a link 4e moves downward by being guided by a mounting bracket 4f, thus OFF operating a knob 9a of the MCCB 9.

Along with the downward movement of the link 4e, a link 4g also moves downward, and one side of a link 4h linked to the link 4g pivots downwardly while the other side of the link 4h pivots upwardly. Along with the pivoting of the link 4h, the protector 6 linked to the other side of the link 4h moves upward. Along with the upward movement of the protector 6, the engaging portion 6c of the protector 6 moves upward and is released from the engagement with the first engagement hole 8a of the baseplate 8, thus bringing the functional unit 2 into a drawable state.

Further, the insertion prevention portion 6a of the protector 6 also moves upward, and the lower end of the insertion prevention portion 6a moves upwardly of the insertion/removal handle insertion slot 2d of the functional unit 2, thus uncovering the insertion/removal handle insertion slot 2d, resulting in a state in which the insertion/removal handle 5 can be inserted into the insertion/removal handle insertion slot 2d of the functional unit 2.

Further, as shown in FIG. 19, the insertion/removal handle 5 is inserted into the insertion/removal handle insertion slot 2d of the functional unit 2, and the first protrusion 5b of the insertion/removal handle 5 is brought into engagement with the engagement elongate hole 7a of the insertion/removal metal piece 7 from the insertion/removal handle insertion slot 2d of the functional unit 2. Subsequently, the second protrusion 5c of the insertion/removal handle 5 is brought into engagement with the second engagement hole 8b formed in the baseplate 8.

In the state in which the first protrusion 5b of the insertion/removal handle 5 is engaged with the engagement elongate hole 7a of the insertion/removal metal piece 7, and the second protrusion 5c of the insertion/removal handle 5 is engaged with the second engagement hole 8b of the baseplate 8, by pivoting the insertion/removal handle basic portion 5a of the insertion/removal handle 5 in a clockwise direction with the second protrusion 5c engaged with the second engagement hole 8b of the baseplate 8 as a fulcrum, the first protrusion 5b of the insertion/removal handle 5 moves in a left direction within the engagement elongate hole 7a of the insertion/removal metal piece 7. The first protrusion 5b of the insertion/removal handle 5 moves in a left direction within the engagement elongate hole 7a of the insertion/removal metal piece 7, and the functional unit 2 is thereby drawn out to the front side.

Further, as shown in FIGS. 21 and 22, by further pivoting the insertion/removal handle basic portion 5a of the insertion/removal handle 5 in the clockwise direction, the first protrusion 5b of the insertion/removal handle 5 moves to the left end side in the engagement elongate hole 7a of the insertion/removal metal piece 7, thus making it possible to draw out the functional unit 2 to the front side.

In this way, the insertion/removal handle 5 can be inserted into the insertion/removal handle insertion slot 2d of the functional unit 2 only when the MCCB operating handle mechanism 4 is in the OFF state, and the functional unit 2 can be drawn out by pivoting the insertion/removal handle basic portion 5a of the insertion/removal handle 5 in the clockwise direction with the second protrusion 5c engaged with the second engagement hole 8b of the baseplate 8 as the fulcrum in the state in which the first protrusion 5b of the insertion/removal handle 5 is engaged with the engagement elongate hole 7a of the insertion/removal metal piece 7, and the second protrusion 5c of the insertion/removal handle 5 is engaged with the second engagement hole 8b of the baseplate 8, therefore making it possible to obtain a control center superior in safety.

The above described functional unit 2 in Embodiment 1 is such that the engaging portion 6c of the protector 6 to be engaged with the baseplate 8 is in the non-charging portion 2b even when the MCCB operating handle mechanism 4 is in the OFF state. Because of this, there is the possibility that the engaging portion 6c of the protector 6 to be engaged with the baseplate 8 interferes with the insertion/removal handle 5 when the insertion/removal handle 5 is inserted or operated, thus preventing the movement of the insertion/removal handle 5.

As the recessed portion 5d is provided between the first protrusion 5b and second protrusion 5c of the insertion/removal handle 5, as shown in FIGS. 4, 5, and 19 to 22, the recessed portion 5d of the insertion/removal handle 5 enables the insertion/removal handle 5 to avoid interfering with the engaging portion 6c of the protector 6 to be engaged with the baseplate 8. Hereafter, a description will be given of the procedure of drawing out the functional unit 2 using the insertion/removal handle 5 provided with the recessed portion 5d, and of the effectiveness of the recessed portion 5d.

The insertion/removal handle 5 is inserted from the insertion/removal handle insertion slot 2d, the first protrusion 5b of the insertion/removal handle 5 is brought into engagement with the engagement elongate hole 7a of the insertion/removal metal piece 7, and the second protrusion 5c of the insertion/removal handle 5 is brought into engagement with the second engagement hole 8b of the baseplate 8. At this time, the insertion/removal handle 5 and the engaging portion 6c of the protector 6 are not interfering with each other due to the recessed portion 5d.

In this state, the insertion/removal handle basic portion 5a of the insertion/removal handle 5 is pivoted in the clockwise direction with the second protrusion 5c engaged with the second engagement hole 8b of the baseplate 8 as a fulcrum, and the first protrusion 5b of the insertion/removal handle 5 thereby produces a force pushing in a near side direction while moving leftward in the engagement elongated hole 7a of the insertion/removal metal piece 7.

The force pushing in the near side direction transfers to the functional unit 2 via the insertion/removal metal piece 7, thus drawing out the functional unit 2. When operating the insertion/removal handle 5, too, the engaging portion 6c of the protector 6 to be engaged with the baseplate 8 follows the shape of the recessed portion 5d of the insertion/removal handle 5, thereby avoiding the interference. As the functional unit 2 can be drawn out in this way, it is possible to obtain a control center superior in safety.

After the functional unit 2 has been drawn out, the inserted first protrusion 5b and second protrusion 5c of the insertion/removal handle 5 are removed, and the insertion/removal handle 5 is pulled out from the insertion/removal handle insertion slot 2d of the functional unit 2, thus completing the operation. Also, the inserting procedure can be carried out in the reverse order to the drawing-out procedure.

The invention is such that the individual embodiments can be freely combined, and any of the individual embodiments can be appropriately modified or omitted, within the scope of the invention as defined by the claims.

### Industrial Applicability

The invention is suitable for realizing a control center superior in safety which prevents the insertion/removal handle from being inserted into the insertion/removal handle insertion slot when the operating handle mechanism in the functional unit is in the ON state, and enables the insertion/removal handle to be inserted into the insertion/removal handle insertion slot when the operating handle mechanism in the functional unit is in the OFF state.

### List of Reference Signs

- 1: Casing
- 1a: Functional unit housing space
- 2: Functional unit
- 2a: Charging portion
- 2b: Non-charging portion
- 2c: Functional unit inner partition plate
- 2d: Insertion/removal handle insertion slot
- 4: MCCB operating handle mechanism
- 5: Insertion/removal handle
- 5b: First protrusion
- 5c: Second protrusion
- 5d: Recessed portion
- 6: Protector
- 6a: Insertion prevention portion
- 6b: Linking hole
- 6c: Engaging portion
- 7: Insertion/removal metal piece
- 7a: Engagement elongate hole
- 8: Baseplate
- 8a: First engagement hole
- 8b: Second engagement hole
- 9: MCCB

## Claims

1. A control center comprising a functional unit (2) which is housed on a baseplate (8) of a functional unit housing space (1a) of a casing (1) and which is equipped with a molded case circuit breaker (9), wherein the functional unit (2) is provided with:
- an operating handle mechanism (4) which is configured to turn ON/OFF the molded case circuit breaker (9);
- an insertion/removal handle insertion slot (2d) into which to insert an insertion/removal handle (5) having a first protrusion (5b) and second protrusion (5c);
- a protector (6) which is linked to the operating handle mechanism (4) and which has an insertion prevention portion (6a) for preventing the insertion of the insertion/removal handle (5) and an engaging portion (6c) on the lower end side, wherein when the operating handle mechanism (4) is in an ON state, the insertion prevention portion (6a) covers the insertion/removal handle insertion slot (2d), thus preventing the insertion/removal handle (5) from being inserted into the insertion/removal handle insertion slot (2d);
- an insertion/removal metal piece (7) which is provided in the insertion/removal handle insertion slot (2d) and which has an engagement elongate hole (7a) with which the first protrusion (5b) of the insertion/removal handle (5) is to be engaged;
and wherein the control center further comprises:
- a first engagement hole (8a) which is formed in the baseplate (8) and with which the engaging portion (6c) of the protector (6) is to be engaged when the operating handle mechanism (4) is in the ON state; and
- a second engagement hole (8b) which is formed in the baseplate (8) and with which the second protrusion (5c) of the insertion/removal handle (5) is to be engaged.

2. The control center according to claim 1,
**characterized in that** the insertion/removal handle insertion slot (2d) is isolated from a charging portion (2a) of the functional unit (2).

3. The control center according to claim 1, further comprising the insertion/removal handle (5), wherein the insertion/removal handle (5) is provided with a recessed portion (5d) between the first protrusion (5b) and the second protrusion (5c).

## Patentansprüche

1. Steuerungszentrale, die eine Funktionseinheit (2) aufweist, die auf einer Grundplatte (8) eines Funktionseinheits-Gehäuseraums (1a) eines Gehäuses (1) untergebracht ist und die mit einem Formgehäuse-Leistungsschalter (9) ausgestattet ist, wobei die Funktionseinheit (2) Folgendes aufweist:
- einen Betätigungsgriffmechanismus (4), der dazu ausgebildet ist, den Formgehäuse-Leistungsschalter (9) EIN/AUS zu schalten;
- einen Montage-/Demontagegriff-Einsetzschlitz (2d), in den ein Montage-/Demontagegriff (5) eingesetzt werden kann, der einen ersten Vorsprung (5b) und einen zweiten Vorsprung (5c) aufweist;
- eine Schutzeinrichtung (6), die mit dem Betätigungsgriffmechanismus (4) verbunden ist und einen Einsetzverhinderungsbereich (6a) zum Verhindern des Einsetzens des Montage-/Demontagegriffs (5) und einen Eingriffsbereich (6c) auf der unteren Endseite aufweist, wobei dann, wenn sich der Betätigungsgriffmechanismus (4) in einem EIN-Zustand befindet, der Einsetzverhinderungsbereich (6a) den Montage-/Demontagegriff-Einsetzschlitz (2d) abdeckt und somit verhindert, dass der Montage-/Demontagegriff (5) in den Montage-/Demontagegriff-Einsetzschlitz (2d) eingesetzt wird;
- ein Montage-/Demontagemetallstück (7), das in dem Montage-/Demontagegriff-Einsetzschlitz (2d) angeordnet ist und ein Eingriffslangloch (7a) aufweist, mit dem der erste Vorsprung (5b) des Montage-/Demontagegriffs (5) in Eingriff zu bringen ist;
und wobei die Steuerungszentrale ferner Folgendes aufweist:
- ein erstes Eingriffsloch (8a), das in der Grundplatte (8) ausgebildet ist und mit dem der Eingriffsbereich (6c) der Schutzeinrichtung (6) in Eingriff gebracht wird, wenn sich der Betätigungsgriffmechanismus (4) in dem EIN-Zustand befindet; und
- ein zweites Eingriffsloch (8b), das in der Grundplatte (8) ausgebildet ist und mit dem der zweite Vorsprung (5c) des Montage-/Demontagegriffs (5) in Eingriff gebracht wird.

2. Steuerungszentrale nach Anspruch 1,
**dadurch gekennzeichnet,**
**dass** der Montage-/Demontagegriff-Einsetzschlitz (2d) von einem Ladebereich (2a) der Funktionseinheit (2) getrennt ist.

3. Steuerungszentrale nach Anspruch 1,
die ferner den Montage-/Demontagegriff (5) aufweist, wobei der Montage-/Demontagegriff (5) einen Aussparungsbereich (5d) zwischen dem ersten Vorsprung (5b) und dem zweiten Vorsprung (5c) aufweist.

## Revendications

1. Centrale de commande comprenant une unité fonctionnelle (2) qui est logée sur une plaque de base (8) d'un espace de logement pour unité fonctionnelle (1a) d'un boîtier (1) et qui est équipée d'un coupe-circuit en boîtier moulé (9), dans laquelle l'unité fonctionnelle (2) est dotée :
- d'un mécanisme à manette d'actionnement (4) qui est configuré pour commuter le coupe-circuit en boîtier moulé (9) en fermeture/ouverture ;
- d'une fente d'insertion pour manette d'insertion/enlèvement (2d) dans laquelle il s'agit d'insérer une manette d'insertion/enlèvement (5) ayant une première projection (5b) et une seconde projection (5c) ;
- d'un protecteur (6) qui est relié au mécanisme à manette d'actionnement (4) et qui comprend une portion d'empêchement d'insertion (6a) pour empêcher l'insertion de la manette d'insertion/enlèvement (5) et une portion d'engagement (6c) sur le côté de l'extrémité inférieure, dans laquelle, quand le mécanisme à manette d'actionnement (4) est dans un état fermé, la portion d'empêchement d'insertion (6a) couvre la fente d'insertion pour manette d'insertion/enlèvement (2d), en empêchant ainsi que la manette d'insertion/enlèvement (5) soit insérée dans la fente d'insertion pour manette d'insertion/enlèvement (2d) ;
un morceau de métal d'insertion/enlèvement (7) qui est prévu dans la fente d'insertion pour manette d'insertion/enlèvement (2d) et qui présente un trou allongé d'engagement (7a) avec lequel la première projection (5b) de la manette d'insertion/enlèvement (5) doit venir s'engager ; et
dans lequel le centre de commande comprend en outre :
- un premier trou d'engagement (8a) qui est formé dans la plaque de base (8) et avec lequel la portion d'engagement (6c) du protecteur (6) doit être engagée quand le mécanisme à manette d'actionnement (4) est dans l'état fermé ; et
- un second trou d'engagement (8b) qui est formé dans la plaque de base (8) et avec lequel la seconde projection (5c) de la manette d'insertion/enlèvement (5) doit venir s'engager.

2. Centrale de commande selon la revendication 1,
**caractérisée en ce que** la fente d'insertion pour manette d'insertion/enlèvement (24) est isolée vis-à-vis d'une portion de charge (2a) de l'unité fonctionnelle (2).

3. Centrale de commande selon la revendication 1,
comprenant en outre la manette d'insertion/enlèvement (5), dans laquelle la manette d'insertion/enlèvement (5) est dotée d'une portion évidée (5d) entre la première projection (5b) et la seconde projection (5c).
